# EUROPEAN PATENT SPECIFICATION

(11) **EP 2 074 152 B1**
(45) Date of publication and mention of the grant of the patent: **06.04.2011**
(21) Application number: 07853913.7
(22) Date of filing: 10.10.2007
(51) Int. Cl.: C08F 4/52, C09J 4/00

(54) **ACCELERATED ORGANOBORANE INITIATED POLYMERIZABLE COMPOSITIONS**
BESCHLEUNIGTE ORGANOBORAN-INITIIERTE UND POLYMERISIERBARE ZUSAMMENSETZUNGEN
COMPOSITIONS À POLYMÉRISATION ACCÉLÉRÉE INITIÉE PAR UN ORGANOBORANE

(30) Priority: 12.10.2006 US 546753
(43) Date of publication of application: 01.07.2009
(73) Proprietor: DOW GLOBAL TECHNOLOGIES INC., Midland, MI 48674 (US)
(72) Inventor: JIALANELLA, Gary, Oxford, MI 48371 (US); COLE, Eric, Grand Blanc, MI 48439 (US)
(74) Representative: Raynor, John
(86) International application number: PCT/US2007/080930
(87) International publication number: WO 2008/045930

(56) References cited:
- US-A1- 2005 137 370
- US-B1- 6 433 091
- EMERALD: "Hypro Reactive Liquid Polymers CTB 2000X162 (Product Data Sheets)" INTERNET CITATION, [Online] June 2006 (2006-06), XP007904573 Retrieved from the Internet: URL:http://www.emeraldmaterials.com/epm/sp ecpoly/micms_doc_admin.display? p_customer=FISSPECPOLY&p_name=HYPRO%202000 X162.PDF> [retrieved on 2008-04-18]

## Description

The present application claims the benefit of the filing date of U.S. Application Serial No. 11/546,753, filed October 12, 2006.

### Background of the Invention

This invention relates to accelerated polymerizable compositions comprising compounds containing moieties capable of free radical polymerization, organoboron compounds capable of forming free radical generating species capable of initiating free radical polymerization and adhesives based on such compositions. In another embodiment the invention relates to a method of polymerizing compounds containing moieties capable of free radical polymerization and to methods of bonding substrates using such compositions.

Low surface energy olefins such as polyethylene, polypropylene and polytetrafluroethylene have a variety of attractive properties in a variety of uses, such as toys, automobile parts, and furniture applications. Because of the low surface energy of these plastic materials, it is very difficult to find adhesive compositions that bond to these materials. Adhesives have been developed for bonding to these plastics. A series of patents issued to Skoultchi, U.S. Patent Numbers 5,106,928; 5,143,884; 5,286,821; 5,310,835 and 5,376,746; Pocius, U.S 5,616,796; US 5,621,143; U.S. 5,681,910; U.S. 5,686,544; U.S. Patent 5,718,977; and U.S. Patent 5,795,657; Zharov, et al., U.S. Patent Numbers 5,539,070; 5,690,780; and 5,691,065; and Sonnenschein et al. U.S. Patent Numbers 6,806,330; 6,730,759; 6,706,831; 6,713,578; 6,713,579 and 6,710,145 disclose polymerizable acrylic compositions which are particularly useful as adhesives wherein organoboron amine complexes are used to initiate cure. It is disclosed that these complexes are useful for initiating polymerization of adhesives which bond to low surface energy substrates.

Many of the disclosed compositions polymerize more slowly than is desired for use in industrial processes. This results in processes which exhibit low productivity. Jialanella, U.S. Patent Publication 2005-0137370 A1 discloses that the addition of cure accelerators to the above described compositions wherein the cure accelerators comprises compounds containing quinone structures; or compounds containing at least one aromatic ring and at least one, preferably two, substituents on the aromatic ring selected from hydroxyl, ether and both wherein the two substituents are located either ortho or para with respect to one another, and a compound having a peroxy moiety. The accelerators described function well with the exception that the adhesion of these compositions at low temperatures, i.e., about -30°C, is not as good as desired.

Therefore, there is a need for adhesive systems that are capable of bonding to low surface energy substrates which cure rapidly and exhibit excellent adhesion at low temperatures.

### Summary of Invention

The invention is a two part polymerizable composition comprising in one part i) an organoboron compound capable of forming free radical generating species; and in the second part ii) one or more compounds capable of free radical polymerization; iii) one or more cure accelerators comprising a) at least one compound containing a quinone structure or b) at least one compound containing at least one aromatic ring and one or more substituents on the aromatic ring selected from hydroxyl, ether and both and a compound with a peroxide moiety; iv) one or more modifiers having groups which react with the compounds capable of free radical polymerization, preferable one or more vinyl functional modifiers, having a glass transition temperature of -50°C or less, and v) 5 to 35 parts by weight of one or more chlorinated or chlorosulfonated polyethylenes or block copolymers of styrene and conjugated dienes.

The second part may further contain an agent capable of causing the organoboron compound to form free radical generating species upon contacting the two parts hereinafter referred to as a liberating agent. The first part may further comprise one or more compounds capable of free radical polymerization. This facilitates formulating compositions that have commercially desirable volumetric ratios of the two parts. Adhesive compositions of the present formulation provide excellent adhesion to low surface energy substrates such as plastics especially at low temperatures, and exhibit a faster curing profile.

The invention is also a method of polymerization comprising contacting the components of the polymerizable composition under conditions such that the polymerizable compounds undergo polymerization. In one embodiment, the contacting occurs at, or near, ambient temperature. In another embodiment, the method further comprises the step of heating the polymerizable composition to an elevated temperature under conditions such that the organoboron compound forms a free radical generating species and the composition undergoes polymerization.

In yet another embodiment the invention is a method of bonding two or more substrates together which comprises contacting the components of the polymerizable composition together under conditions, such that polymerization is initiated; contacting the polymerizable composition with the two or more substrates; positioning the two or more substrates, such that the polymerizable composition is located between the two or more substrates; and allowing the polymerizable composition to polymerize and to bond the two or more substrates together. In yet another embodiment the invention is a method of coating a substrate which comprises contacting a composition according to the invention with one or more surfaces of a substrate and initiating polymerization of the composition according to the invention. In another embodiment the invention is a laminate comprising two substrates having disposed between the substrates and bound to each substrate a composition according to the invention.

The polymerizable compositions of the invention are stable at, or near, ambient temperature and can be cured upon demand by contacting the two parts of the composition, or alternatively by contacting the two parts of the composition and thereafter heating the compositions above the temperature at which the organoboron compound forms a free radical generating species. Furthermore, the polymerizable compositions of the invention can form good bonds to low surface energy substrates without the need for primers or surface treatment, especially at low temperatures. The polymerizable compositions of the invention may be formulated to be dispensed in commercial equipment at volume ratios of the two parts of 4:1 or less. The polymerizable compositions of the invention exhibit rapid cure and preferably exhibit a lap shear strength according to ASTM 03165-91 of 50 psi (0.34 mPa) or greater 1 hour after application. Preferably, the polymerizable compositions demonstrate excellent adhesion to substrates along with the rapid cure as discussed.

### Detailed Description Of The Invention

The polymerization initiator is an organoboron containing compound which is capable of forming a trivalent organoboron compound. In a preferred embodiment, the free radical generating species is a trivalent organoboron compound. Preferred boron containing compounds are tetravalent in that they have four bonds to the boron of which at least three are covalent and one may be covalent or in the form of an electronic association with a complexing agent. The free radical generating species, such as a trivalent boron compound, is formed when the boron containing compound is contacted with another substance, referred to herein as a liberating compound. The free radical generating species generates free radicals by reacting with environmental oxygen. In the embodiment wherein the boron containing compound is tetravalent such contacting causes the abstraction of one of the ligands bonded to or complexed to the boron atom to convert it to a trivalent borane. Free radical generating species is a compound that contains or generates free radicals under polymerization conditions. The liberating compound can be any compound which reacts with the complexing agent or which abstracts a cation from the boron containing compound. Preferably, the boron containing compound is an organoborate, an organoboron amine complex or an amido organoborate.

An organoborate is a salt of a positive cation and an anionic tetravalent boron. Any organoborate which can be converted to an organoboron by contact with a liberating compound may be used. One class of preferred organoborates, (also known as quaternary boron salts) are disclosed in Kneafsey et al., U.S. 2003/0226472 and Kneafsey et al., U.S. 2004/0068067. Preferred organoborates disclosed in these two U.S. Patent applications are described by the following formula 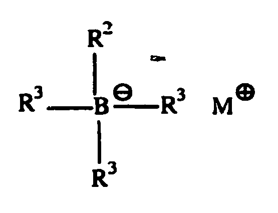 wherein:
R² is C₁-C₁₀ alkyl;
R³ is independently in each occurrence C₁-C₁₀ alkyl, C₃-C₁₀ cycloalkyl, phenyl, phenyl-substituted C₁-C₁₀ alkyl or phenyl substituted C₃-C₁₀ cycloalkyl, provided that any two of R² and/or R³ may optionally be part of a carbocyclic ring; and
M⁺ is a metal ion or a quaternary ammonium ion. Preferred examples of organoborates include sodium tetraethyl borate, lithium tetraethyl borate, lithium phenyl triethyl borate and tetramethylammonium phenyl triethyl borate.

In another embodiment, the organoborate is an internally blocked borate as disclosed in Kendall et al., U.S. Patent 6,630,555. Disclosed in this patent are four coordinate internally blocked borates wherein the boron atom is part of a ring structure further containing an oxa or thio-moiety. The internally blocked heterocyclic borates preferably have the following structure: 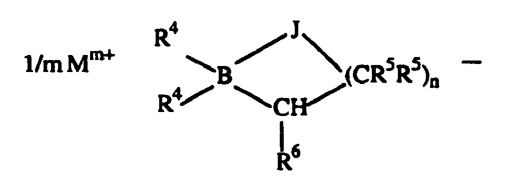 or 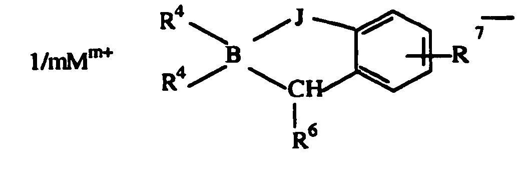 wherein J is oxygen or sulfur; when J represents oxygen, n is the integer 2, 3, 4 or 5; when J represents sulfur, n is the integer 1, 2, 3, 4 or 5; R⁴, R⁵, R⁶ and R⁷ are independently, substituted or unsubstituted, alkyl or alkylene groups containing 1 to 10 carbon atoms, substituted aryl groups having up to 7 to 12 carbon atoms or unsubstituted aryl groups; R³, R⁶ and R⁷ can be hydrogen; R⁴ can be part of a second unsubstituted or substituted cyclic borate; R⁴ can comprise a spiro ring or a spiro-ether ring; R⁴ together with R⁵ can be linked to form a cycloaliphatic ring; or R⁴ together with R³ can comprise a cyclic ether ring and M in this context, is any positively charged species; with m being a number greater than 0.

The term "intemally blocked" in reference to the organoborates described herein means a four coordinate boron atom being part of an internal ring structure bridged across two of the four boron coordinates or valences. Internal blocking includes a single ring or a multi-ring structure where boron is part of one or multi-ring structures.

In the embodiment where the organoboron compound is in the form of an amine complex, the free radical generating species used in the invention is a trialkyl borane or an alkyl cycloalkyl borane. The organoboron used in the complex is a trialkyl borane or an alkyl cycloalkyl borane. Preferably, such borane corresponds to the formula:

B -(R¹)₃

wherein B represents Boron; and R¹ is separately in each occurrence a C₁₋₁₀ alkyl. C₃₋₁₀ cycloalkyl, or two or more of R¹ may combine to form a cycloaliphatic ring. Preferably, R¹ is C₁₋₄ alkyl, even more preferably C₂₋₄ alkyl, and most preferably C₃₋₄ alkyl. Among preferred organoborons are tri-ethyl borane, tri-isopropyl borane and tri-n-butylbomne.

In the embodiment wherein the organoboron compound is an organoboron amine complex, the organoboron is a trivalent organoboron and the amine can be any amine which complexes reversibly with the organoboron. Such complexes are represented by the formula

B(̵-R¹)₃-Am

wherein R¹ is described hereinbefore and Am is an amine.

The amines used to complex the organoboron compound can be any amine or mixture of amines which complex the organoboron and which can be decomplexed when exposed to a liberating compound. The desirability of the use of a given amine in an amine/organoboron complex can be calculated from the energy difference between the Lewis acid-base complex and the sum of energies of the isolated Lewis acid (organoboron) and base (amine) known as binding energy. The more negative the binding energy the more stable the complex. Calculation of the binding energy and preferred binding energies are described in Sonnenschein et al., U.S. 6,706,831 at Column 4, lines 36 to 57.

Preferred amines include the primary or secondary amines or polyamines containing primary or secondary amine groups, or ammonia as disclosed in Zharov, U.S. Patent 5,539,070 at column 5, lines 41 to 53, Skoultchi, U.S. Patent 5,106,928 at column 2, lines 29 to 58, and Pocius, U.S. Patent 5,686,544 at column 7, line 29 to column 10 line 36; ethanolamine, secondary dialkyl diamines or polyoxyalkylenepolyamines; and amine terminated reaction products of diamines and compounds having two or more groups reactive with amines as disclosed in Deviny, U.S. Patent 5,883,208 at column 7, line 30 to column 8, line 56. With respect to the reaction products described in Deviny the preferred diprimary amines include alkyl diprimary amines, aryl diprimary amines, alkylaryl diprimary amines and polyoxyalkylene diamines; and compounds reactive with amines include compounds which contain two or more moieties of carboxylic acids, carboxylic acid esters, carboxylic acid halides, aldehydes, epoxides, alcohols and acrylate groups. Preferred amines described in Deviny include n-octylamine, 1,6-diaminohexane (1,6-hexane diamine), diethylamine, dibutyl amine, diethylene triamine, dipropylene diamine, 1,3-propylene diamine (1,3-propane diamine), 1,2-propylene diamine, 1, 2-ethane diamine, 1,5-pentane diamine, 1,12-dodecanediamine, 2-methyl-1,5-pentane diamine, 3-methyl-1,5-pentane diamine, triethylene tetraamine and diethylene triamine. Preferred polyoxyalkylene polyamines include polyethyleneoxide diamines, polypropyleneoxide diamines, triethylene glycol propylene diamine, polytetramethyleneoxide diamine and polyethyleneoxidecopolypropyleneoxide diamines.

In one preferred embodiment, the amine comprises a compound having a primary amine and one or more hydrogen bond accepting groups, wherein there are at least two carbon atoms, preferably at least about three carbon atoms, between the primary amine and hydrogen bond accepting groups. Preferably, an alkylene moiety is located between the primary amine and the hydrogen bond accepting group. Hydrogen bond accepting group means herein a functional group that through either inter- or intramolecular interaction with a hydrogen of the borane-complexing amine increases the electron density of the nitrogen of the amine group complexing with the borane. Preferred hydrogen bond accepting groups include primary amines, secondary amines, tertiary amines, ethers, halogen, polyethers, thioethers and polyamines. Preferred compounds having a primary amine and one or more hydrogen bond accepting groups are described in Sonnenschein et al., U.S. Patent Numbers 6,730,759, (column 4, line 60 to column 5, line 67); 6,706,831; 6,713,578; 6,713,579 and 6,710,145 relevant portions.

In another embodiment the amine is an aliphatic heterocycle having at least one nitrogen in the heterocycle. The heterocyclic compound may also contain one or more of nitrogen, oxygen, sulfur or double bonds. In addition, the heterocycle may comprise multiple rings wherein at least one of the rings has nitrogen in the ring. Preferable aliphatic heterocyclic amines are described in Sonnenschein et al., U.S. Patent Numbers 6,730,759 (column 6, lines 1 to 45); 6,706,831; 6,713,578; 6,713,579 and 6,710,145 relevant portions.

In yet another embodiment, the amine which is complexed with the organoboron is an amidine. Any compound with amidine structure wherein the amidine has sufficient binding energy as described hereinbefore with the organoboron, may be used. Preferred amidine compounds are described in Sonnenschein et al., U.S. Patent Numbers 6,730,759, (column 6, line 4 to column 7, line 21); 6,706,831; 6,713,578; 6,713,579 and 6,710,145 relevant portions.

In yet another embodiment, the amine that is complexed with the organoboron is a conjugated imine. Any compound with a conjugated imine structure, wherein the imine has sufficient binding energy as described hereinbefore with the organoboron, may be used. The conjugated imine can be a straight or branched chain imine or a cylic imine. Preferred imine compounds are described in Sonnenschein et al., U.S. Patent Numbers, 6,730,759 (column 7, line 22 to column 8, line 24); 6,706,831; 6,713,578; 6,713,579 and 6,710,145 relevant portions.

In another embodiment, the amine can be an alicyclic compound having bound to the alicyclic ring a substituent containing an amine moiety. The amine containing alicyclic compound may have a second substituent that contains one or more nitrogen, oxygen, sulfur atoms or a double bond. The alicyclic ring can contain one or two double bonds. The alicyclic compound may be a single or multiple ring structure. Preferably, the amine on the first substituent is primary or secondary. Preferably, the alicyclic ring is a 5 or 6 membered ring. Preferably, functional groups on the second substituent are amines, ethers, thioethers or halogens. Preferred alicyclic compound with one or more amines containing substituents are described on Sonnenschein et al., U.S. Patent Numbers 6,730,759 (column 8, line 25 to line 59); 6,706,831; 6,713,578; 6,713,579 and 6,710,145 relevant portions.

In another preferred embodiment the amine further contains siloxane, that is, an amino siloxane. Any compound with both amine and siloxane units wherein the amine has sufficient binding energy as described hereinbefore with the organoboron, may be used. Preferred amines with siloxane moieties are further described in U.S. Patent 6,777,512, and titled AMINE ORGANOBORANE COMPLEX INITIATED POLYMERIZABLE COMPOSITIONS CONTAINING SILOXANE POLYMERIZABLE COMPONENTS, (column 10, line 14 to column 11, line 29).

In the embodiment where the organoboron compound is an organoboron amine complex, the equivalent ratio of amine compound(s) to borane compound in the complex is relatively important. An excess of amine is preferred to enhance the stability of the complex and in the embodiment where the liberating compound is an isocyanate functional compound to react with the isocyanate functional compound thereby resulting in the presence of polyurea in the final product. The presence of polyurea improves the high temperature properties of the composition.

In one embodiment the organoboron compound is an amido-borate comprising a tetravalent boron anion wherein the boron atom is bound to a nitrogen compound either covalently or ionically. The amido-borate comprises one or more amido-borate anions and one or more corresponding cations which neutralize the amido-borate anion. A borate is a salt of a positive cation and an anionic tetravalent boron. The amido-borates are organoborates wherein one of the ligands on the boron atom is the nitrogen of ammonia or an organic compound which contains one or more nitrogen atoms and which may contain one or more heteroatoms or one or more heteroatom containing functional moieties wherein the nitrogen may be quaternary and cationic. In some embodiments, the cation can be the nitrogen bonded to the boron in the form of a quaternary nitrogen. This is especially true where the nitrogen compound used to form the amido-borate has more than one nitrogen which is bonded to more than one boron atoms of organoboranes to form the amido-borate. The organoborane bonded to the nitrogen atom to form the amido-borate comprises a boron atom with three bonds to hydrocarbyl moieties wherein the hydrocarbyl moieties may further comprise one or more heteroatoms or heteroatom containing functional groups which do not interfere in the described function of the amido-borate compounds. Preferred heteroatoms which may be present in hydrocarbyl moieties described herein include oxygen, sulfur, nitrogen, silicon, halogens, with oxygen being most preferred. Preferred heteroatom containing functional groups which may be present as part of hydrocarbyl moieties as described herein include ethers, thioethers, amines, silanes, siloxanes with ethers being most preferred. The boron atom may be bonded to three separate hydrocarbyl moieties or may be bonded to two hydrocarbyl moieties wherein one hydrocarbyl moiety has two bonds to the boron atom thereby forming one or more cyclic ring(s). The organoborane used to prepare the amido-borate is preferably a trialkyl borane or an alkyl cycloalkyl borane.

In one embodiment the amido-borate is a compound comprising one or more tetravalent boron anions and one or more of: i) an organic compound containing a nitrogen atom and a cation or ii) an ammonium cation; wherein the each of the one or more tetravalent boron atoms is bonded to the nitrogen atom of an ammonium cation or an organic compound containing a nitrogen atom. In another embodiment the amido-borate comprises two or more tetravalent boron anions wherein at least one of the borates anions is bonded to the nitrogen atom of an organic compound; and at least one of the borate anions is bonded to the nitrogen of an ammonium cation; and one or more additional cations wherein the number of additional cations is the same as the number of tetravalent boron atoms bonded to the nitrogen atom of an organic compounds containing at least one nitrogen atom.

The nitrogen containing portion of the amido-borate may be derived from ammonia or any organic compound containing a nitrogen atom which is capable of bonding to boron and is preferably derived from ammonia, a hydrocarbyl amine or a polyamine. The nitrogen atoms of such compounds bonded to the boron atoms to form the borates can be primary, secondary, or quaternary, preferably secondary or tertiary or quaternary. In another preferred embodiment the nitrogen atom bonded to the organoborane to prepare the amido-borate is a nitrogen located in or on the ring of a heteroaromatic cyclic compound. In those embodiments where the nitrogen is quaternary, the quaternary nitrogen portion of the amido-borate is the cationic counterion for the borate anion portion of the compound to which the quaternary nitrogen atom is bonded. The hydrocarbyl amine or polyamine and the nitrogen containing aromatic heterocylic compound may contain heteroatoms as described hereinbefore or be further substituted with substituents which do not interfere with the functioning of such compounds in the compositions of the invention as described hereinbefore. The hydrocarbyl amines preferably correspond to the formula

H₂₋ᵣ-N-(R⁸)ᵣ

wherein R⁸ is independently in each occurrence an alkyl, cycloalkyl, aryl, alkaryl, or aralkyl group; wherein such group may optionally contain one or more heteroatoms, one or more heteroatom containing functional groups, as described hereinbefore, or a proton. R⁸ is preferably C₁₋₁₀ alkyl, C₃₋₁₀cycloalkyl, C₆₋₁₂ aryl, C₇₋₂₀ alkaryl or C₇₋₂₀ aralkyl; wherein such group may optionally contain one or more heteroatoms of O or S, preferably O, or one or more O or S containing heteroatom functional moieties. R⁸ is more preferably C₁₋₄ alkyl or C₁₋₁₀ alkoxyalkyl; even more preferably methyl, ethyl, propyl, methoxypropyl, ethoxypropyl or propoxypropyl. In reference to alkoxyalkyl, the number of carbon atoms refers to the total carbon atoms in the moiety. The hydrocarbyl polyamines preferably correspond to the formula 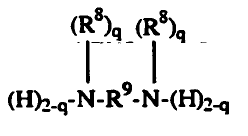 wherein R⁸ is as described hereinbefore;
R⁹ is independently in each occurrence a divalent hydrocarbyl moiety which may contain one or more heteroatoms or one or more heteroatom containing functional moieties as described hereinbefore;
r is independently in each occurrence 0, 1 or 2; and
q is independently in each occurrence 1 or 2.
The aromatic nitrogen containing heterocyclic compounds preferably correspond to the formula 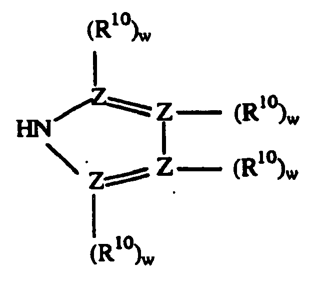 wherein R¹⁰ is independently in each occurrence hydrogen, an alkyl, an alkoxyl, aralkyl or an aryl group; wherein such group may optionally contain one or more heteroatoms, one or more heteroatom containing functional moieties, as described hereinbefore, or a proton; Z is independently in each occurrence N, Si, P or C and w is 0 or 1 with the proviso that where Z is N or P, w can only be 0, whereas when Z is C or Si; w can only be 1. Preferably, Z is N or C. R¹⁰ is preferably hydrogen, C₁₋₁₀alkyl, C₃₋₁₀cycloalkyl, C₆₋₁₂ aryl, C₇₋₂₀ alkaryl or C₇₋₂₀ aralkyl; wherein such group may optionally contain one or more heteroatoms of O or S, preferably O, or one or more O or S heteroatom containing functional moieties. R³ is more preferably hydrogen, C₁₋₄ alkyl or a C₁₋₁₀ alkoxyalkyl even more preferably hydrogen, methyl, ethyl, propyl and most preferably hydrogen. Preferably, R⁹ is independently in each occurrence C₂₋₂₀alkylene, C₃₋₂₀cycloalkylene, C₆₋₂₀ arylene, C₇₋₂₀ alkarylene or C₇₋₂₀ aralkylene; optionally containing one or more heteroatoms or heteroatom containing functional moieties; preferably C₂₋₂₀ alkylene or C₂₋₂₀ alkylene groups containing one or more oxygen atoms; and even more preferably C₂₋₄ alkylene. Preferred heteroatoms are O or S, with O most preferred.

The cation which forms the salt with the amido-borate can be any cation which forms a salt with the amido-borate. The cation can be any group IA and group IIA metal, any inorganic cation or organic cation. Preferably, the cation is an onium ion or an alkali metal ion. More preferably the cation is sodium, potassium, a phosphonium or an ammonium ion. Preferred ammonium ions are tetraalkyl ammonium ions, with tetramethyl ammonium ion being most preferred. Preferred phosphonium ions are tetraalkyl phosphonium or tetraaryl phosphonium; with tetrabutyl phosphonium and tetraphenyl phosphonium preferred.

The amido-borates preferably correspond to one of the formulas: 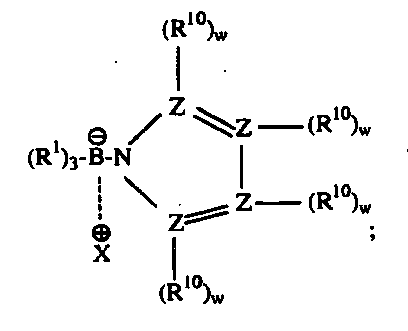 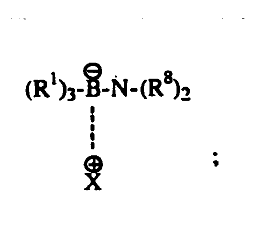 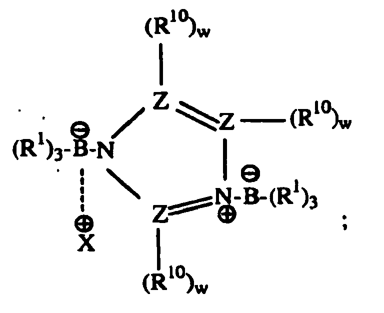 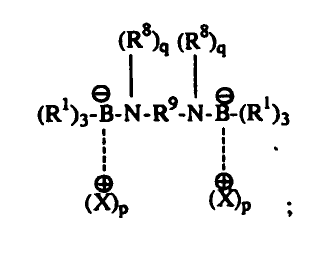 wherein R¹, R⁸, R⁹, R¹⁰ and w are as described hereinbefore;
X is independently in each occurrence a cation;
p is independently in each occurrence 0 or 1;
q is independently in each occurrence 1 or 2 wherein q is 2. The nitrogen atom is the cation counter-balancing the borate anion;
with the proviso that the sum of p and q on each linked boron and nitrogen pair is 2; and the sum of the p is I or 2. Where q is 2, the nitrogen to which it is bonded is quaternary and carries a positive charge which balances the negative charge found on the boron of the borate and a cation is not needed to neutralize the borate.

Preferably, X is independently in each occurrence an onium or an alkali metal ion; more preferably X is an ammonium, phosphonium, potassium or sodium cation; even more preferably X is a tetraalkyl ammonium, tetraalkyl phosphonium, tetraaryl phosphonium or sodium and most preferably X is tetramethyl ammonium, tetrabutyl ammonium, tetrabutyl phosphonium or tetraphenyl phosphonium.

In another embodiment the cationic species can have more than one cationic species that form salts with the borate anions. Thus, the cationic species can form a salt with more than one borate species. Preferably, the cationic species with more than one cation have 2 to 4, preferably 2 or 3 cations and even more preferably 2. Among preferred cationic species having more than one cation are compounds having 2 or more ammonium or phosphonium cations, with compounds having two ammonium cations being preferred. Examples of such compounds include 1,2(di(trimethylammonium)) ethane. In the embodiment where the cationic species have more than one cation, the amido-borates preferably correspond to the formulas: 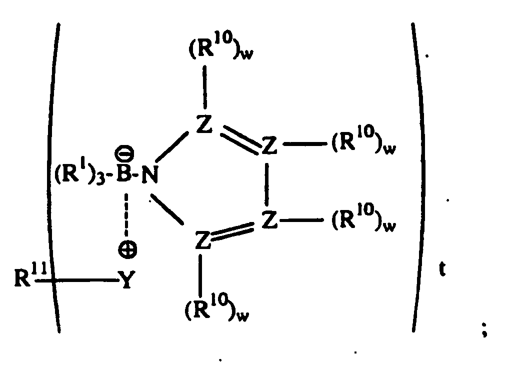 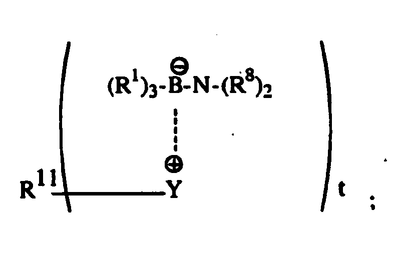 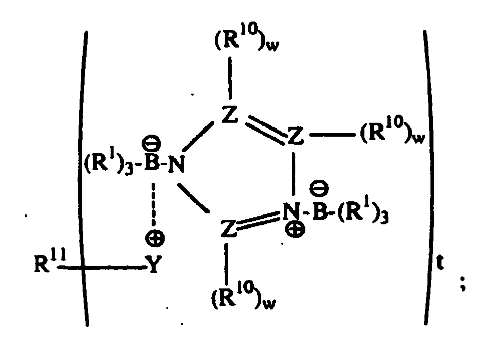 and 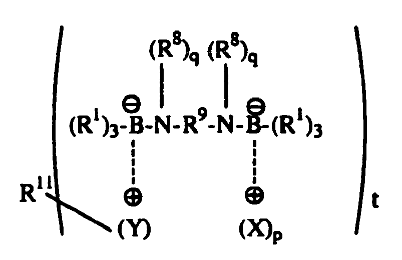 wherein R¹, R⁸, R⁹, R¹⁰, w, X, p and q are as described hereinbefore;
R¹¹ is independently in each occurrence a t-valent hydrocarbyl group optionally containing one or more heteroatoms or heteroatom containing functional moieties as described hereinbefore;
Y is independently in each occurrence 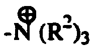 or 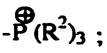 t is independently in each occurrence 2 or greater. Preferably, t is 2 to 4, even more preferably 2 or 3 and most preferably 2.
Preferably, R¹¹ is independently in each occurrence a t-valent C₂₋₂₀ alkylene; C₃₋₂₀ cycloalkylene; C₆₋₂₀ arylene; C₇₋₂₀ alkarylene; or C₇₋₂₀ aralkylene optionally containing one or more heteroatoms or heteroatom containing functional moieties, preferred heteroatoms are sulfur and oxygen with oxygen most preferred. More preferably R¹¹ is a t-valent alkylene group, and more preferably a t-valent C₂₋₆alkylene group. Most preferably R¹¹ is a divalent C₂₋₄ alkylene group.

The amido-borates can be prepared from the base amines described above, such amines are commercially available. The amine can be contacted with a base, in a solvent and no solvent if the amine is liquid, resulting in a salt. Inert organic solvents such as tetrahydrofuran may be used. A salt of the amine and the cation from the base is formed. The resulting salt is contacted with a trivalent organoborane to form the amido-borate. The contacting is preferably performed in a vacuum or under an inert atmosphere. Preferably, the process is performed at ambient temperatures. If a solvent is used, it can be removed in vacuo.

The amido-borate is capable of forming a trivalent organoboron compound. The amido-borates are tetravalent in that they have four bonds to the boron. The free radical generating species, the trivalent boron compound, is formed when the amido-borate is contacted with a liberating compound. The trivalent borane generates free radicals by reacting with environmental oxygen.

The organoborane compounds are used in the polymerizable compositions of the invention in an amount sufficient to initiate polymerization when the trivalent organoboron is liberated and to facilitate bonding of the polymerizable compositions where desired. Preferably, the organoboron compound is present in polymerizable compositions in an amount of 0.1 parts by weight based on 100 parts by weight of the composition or greater, more preferably 0.5 parts by weight or greater and most preferably 1 part by weight or greater. Preferably, the organoboron compound is present in polymerizable compositions in an amount of 30 parts by weight or less based on 100 parts by weight of the composition, more preferably 20 parts by weight or less and most preferably 10 parts by weight or less.

In those embodiments where an amido-borate is utilized as the polymerization inhibitor, the compositions of the invention further comprise a second amine which may further comprise polar functional groups. The second amine can be any amine which stabilizes the compositions of the invention against undesired polymerization. Preferred polar functional groups are ether groups, thioether groups, secondary and tertiary amines. Preferably, the second amine comprises an alkoxy alkyl amine or a polyamine, that is, a compound having two or more amino groups. The alkyl backbone of the second amine is preferably C₂₋₈ alkyl group and most preferably C₂₋₄ alkyl. Preferably, the alkyl group on the alkoxy group is a C₁₋₈ alkyl, more preferably a C₁₋₄ alkyl and most preferably a methyl group. Preferred second amines correspond to the formula R¹²O-R¹³-NH₂ wherein R¹² is independently in each occurrence alkyl and R¹³ is independently in each occurrence a divalent alkyl group. Preferably, R¹² is C₁₋₁₀alkyl, even preferably C ₁₋₄ alkyl, and most preferably methyl. Preferably, R¹³ is C₁₋₈ alkylene (a divalent alkyl moiety) and most preferably C₂₋₄ alkylene. Preferred alkoxy alkyl amines include methoxypropyl amine, methoxyethylamine and ethoxypropylamine; with methoxypropyl amine most preferred. The second amine is present in a sufficient amount to stabilize the compositions of the invention to prevent premature polymerization. Preferably, the second amine is present in an amount 1 mole percent or greater based on the moles of the amido-borate present and more preferably an amount of 10 mole percent or greater. Preferably, the second amine is present in an amount of 1,000 mole percent or less based on the moles of the amido-borate present or less and more preferably of 300 mole percent or less.

Compounds capable of free radical polymerization which may be used in the polymerizable compositions of the invention include any monomers, oligomers, polymers or mixtures thereof which contain olefinic unsaturation which can polymerize by free radical polymerization. Such compounds are well known to those skilled in the art. Mottus, U.S. Patent 3,275,611, provides a description of such compounds at column 2, line 46 to column 4, line 16. Preferred classes of compounds containing olefinic unsaturation are Sonnenschein et al., U.S. Patent Numbers 6,730,759 (column 9, line 7 to line 54); 6,706,831; 6,713,578; 6,713,579 and 6,710,145 relevant portions. Examples of preferable acrylates and methacrylates are disclosed in Skoultchi, U.S. Patent 5,286,821 at column 3, line 50 to column 6, line 12 and Pocius, U.S. Patent 5,681,910 at column 9, line 28 to column 12, line 25.
Also useful in these compositions are acrylate crosslinking molecules including ethylene glycol dimethacrylate, ethylene glycol diacrylate, triethyleneglycol dimethacrylate, diethylene glycol bismethacryloxy carbonate, polyethylene glycol diacrylate, tetraethylene glycol dimethacrylate, diglycerol diacrylate, diethylene glycol dimethacrylate, pentaerythritol triacrylate, trimethylolpropane trimethacrylate, isobomylmethacrylate and tetrahydrofurfuryl methacrylate. In the embodiment where the composition is used as an adhesive, acrylate and/or methacrylate based compounds are preferably used as the compounds capable of free radical polymerization. The most preferred acrylate and methacrylate compounds include methylmethacrylate, butylmethacrylate, 2-ethylhexylmethacrylate, and cyclohexylmethylmethacrylate.

Preferred amounts of compounds capable of free radical polymerization are preferably 10 parts by weight or greater based on 100 parts of the total polymerizable composition, more preferably 20 parts by weight or greater and most preferably 30 parts by weight or greater. Preferred amounts of compounds capable of free radical polymerization are preferably 90 parts by weight or less based on 100 parts by weight of the polymerizable composition, more preferably 85 parts by weight or less and most preferably 80 parts by weight or less.

In another embodiment, the compositions of the invention include two part polymerizable compositions comprising in one part an organoboron compound and one or more compounds containing one or more ring opening heterocyclic moieties, and in a second part, compounds capable of being polymerized by free radical polymerization, a catalyst capable of polymerizing compounds containing ring opening heterocyclic moieties, optionally, a component that will cause the organoboron compound to form a free radical generating species. In one embodiment the invention is a two phase system comprising a first phase containing one or more polymers prepared from the compounds which polymerize by free radical polymerization and a second phase comprising polymerized or partially polymerized compounds derived from one or more compounds containing ring opening heterocyclic moieties. Such polymerizable compositions and the polymers resulting from such compositions are described in Sonnenschein et al., U.S. Patent 6,762,260 relevant compositions.
The compound containing a heterocyclic ring opening moiety can be any monomer, oligomer or prepolymer containing a heterocyclic moiety capable of ring opening and polymerization. The heteroatom in the heterocyclic moiety is preferably nitrogen, oxygen or sulfur, with nitrogen and oxygen being preferred and oxygen being most preferred. Preferably, the heterocyclic moiety is a 3 membered ring. Preferred heterocyclic moieties are oxirane and aziridine moieties, with oxirane moieties being most preferred. Preferred heterocyclic ring opening compounds are further described in Sonnenschein et al., U.S. Patent 6,762,260 (column 10, line 34 to column 11, line 22), The polymerizable formulation may contain 2 parts by weight or greater of heterocyclic polymerizable compound based on 100 parts by weight of the polymerizable composition; more preferably 5 parts by weight or greater and most preferred 10 parts by weight or greater. The polymerizable formulation may contain 50 parts by weight or less based on 100 parts by weight of the polymerizable composition, more preferably 45 parts by weight of less and most preferably 40 parts by weight or less of heterocyclic polymerizable compound. In some cases it may be useful to crosslink the free radical polymerizable compound phase to the heterocyclic ring opening polymerizable compound derived phase as described in Sonnenschein et al, U.S. Patent 6,762,260 (column 11, line 53 to column 1, line 11). The amount of crosslinker used is that amount which gives the desired properties, that is, sufficient lap shear strength at 125°C or above, yet does not cause the room temperature adhesive strength to go below the desired value as defined herein. Preferred amounts of crosslinker are 0 parts by weight or greater based on 100 parts by weight of the polymerizable formulation, more preferably 1 part by weight or greater; even more preferably about 3 parts by weight or greater and most preferably 5 parts by weight or greater. Preferably, the amount of crosslinker used is 20 parts by weight based on 100 parts by weight of the total polymerizable formulation or less; even more preferably 15 parts by weight or less and most preferably 12 parts by weight or less.

In one embodiment the invention of the polymerizable compositions may further comprise one or more compounds, oligomers or prepolymers having a siloxane backbone and reactive moieties capable of polymerization a catalyst for the polymerization of the one or more compounds, oligomers or prepolymers having a siloxane backbone and reactive moieties capable of polymerization as disclosed in U.S. Patent 6,777,512, titled AMINE ORGANOBORANE COMPLEX INITIATED POLYMERIZABLE COMPOSITIONS CONTAINING SILOXANE POLYMERIZABLE COMPONENTS (column 12, line 66 to column 15, line 54).

The organoboron compounds useful for polymerization of the compounds having moieties capable of free radical polymerization may be converted to compounds capable of forming free radical generating species by the application of a liberating compound, sometimes also referred to as a decomplexation agent, that will cause the formation of compounds capable of forming free radical generating species, such as a trivalent borane compound, such as by displacing the amine from the borane.

The displacement of the amine from the alkylborane or the liberation of the trialkyl borane from the borate structure can occur with any chemical for which the exchange energy is favorable, such as mineral acids, organic acids, Lewis acids, isocyanates, acid chlorides, sulphonyl chlorides, aldehydes. Preferred liberating compounds are acids and isocyanates. In those embodiments where the initiator for the ring opening polymerization is a Lewis acid, the liberating compound may be omitted as Lewis acids may also function as the decomplexing agent. If the Lewis acid is used as the liberating compound and heterocyclic ring opening polymerization initiator, no additional amounts are needed over those amounts needed to initiate polymerization. Polymerization may also be initiated thermally. The temperature at which the composition is heated to initiate polymerization is dictated by the binding energy of the complex or compound containing the organoborane. Generally the temperature used to initiate the polymerization by liberating the trialkyl borane is 30°C or greater and preferably 50°C or greater. Preferably, the temperature at which thermally initiated polymerization is initiated is 120°C or less and more preferably 100°C or less. Any heat source that heats the composition to the desired temperature can be used, provided the heat source does not negatively impact the components of the composition or its function. In this manner the composition may be contacted with the substrates either before or after the composition is exposed to heat. If the composition is heated prior to contact with the substrates, the composition should be contacted with the substrates before the composition has polymerized to the point at which the composition is no longer able to adhere to the substrates. It may be necessary in the thermally initiated reaction to control the oxygen content such that there is adequate oxygen to create favorable conditions for radical formation but not so much as to inhibit the polymerization.

The compositions of the invention may further contain a stabilizing amount of a dihydrocarbyl hydroxyl amine. Stabilizing as used herein refers to preventing polymerization until desired. Generally this means that polymerization is inhibited under normal storage conditions. Normal storage conditions mean storage at a temperature of 0°C to 40°C, wherein the adhesive is stored in a sealed container. A stable composition is one that does not experience undesired viscosity growth during a defined period. Viscosity growth is evidence of polymerization of the monomers present. In a preferred embodiment, a composition is stable if the viscosity does not increase more than 150 percent over a time period of 30 days when stored at temperatures of 40°C or less, more preferably 100 percent or less over a time period of 30 days and most preferably 50 percent or less over a time period of 30 days.

Dihydrocarbyl hydroxyl amines useful herein include any such compounds which when included in the compositions of this invention; improve the stability of the compositions as described herein. Preferred dihydrocarbyl amines correspond to the formula (R¹⁴)₂ N-OH wherein R¹⁴ is independently in each occurrence a hydrocarbyl moiety. Preferably, R¹⁴ is independently in each occurrence a C₂₋₃₀ alkyl, alkaryl or aryl moiety; more preferably a C₁₀₋₂₀ alkyl, alkaryl or aryl moiety; with C₁₀₋₂₀ alkyl moieties being even more preferred. Among preferred dihydrocarbyl hydroxyl amines are hydroxylamine freebase from BASF, hydroxylamine derivatives from Mitsui Chemicals America, Inc. and IRGASTAB™ FS Products from Ciba Specialty Chemicals which contains oxidized bis(hydrogenate tallow alkyl) amine also described as bis(N-dodecyl) N-hydroxyl amine. The dihydrocarbyl hydroxyl amines are utilized in sufficient amounts to stabilize the compositions of the invention. Preferably, the dihydrocarbyl hydroxyl amines are used in an amount of 1 part per million by weight of the compositions of the invention or greater, more preferably 2 parts per million or greater and most preferably 5 parts per million or greater. Preferably, the dihydrocarbyl hydroxyl amines are used in an amount of 100,000 parts per million by weight of the compositions of the invention or less, more preferably 50,000 parts per million or less, even more preferably 10,000 parts per million or less and most preferably 3,000 parts per million or less.

The compositions of the invention further comprise an accelerator for the cure of the polymerizable compositions. The accelerators comprise at least one compound containing a quinone structure or at least one compound containing at least one aromatic ring and one or more, preferably two substituents, on the aromatic ring selected from hydroxyl, ether and both when two substituents are used and they are located either ortho or para with respect to one another.

In one embodiment the accelerator is any compound containing a quinone structure which compound accelerates the cure of the polymerizable compositions. For adhesive compositions preferred quinones also facilitate adhesion of the polymeriazble compositions to substrate surfaces. Preferred quinone compounds contain the following structure: 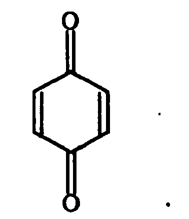 Preferred classes of quinone compounds are substituted or unsubstituted quinone, napthaquinone or anthraquinones. The substituent can be any substituent that does not interfere in the formation of free radicals or the reaction of the free radicals with other compounds. Preferred quinone containing compounds correspond to one of the formulas: 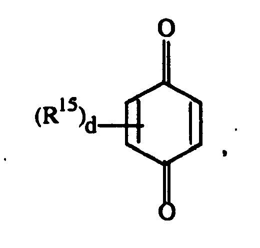 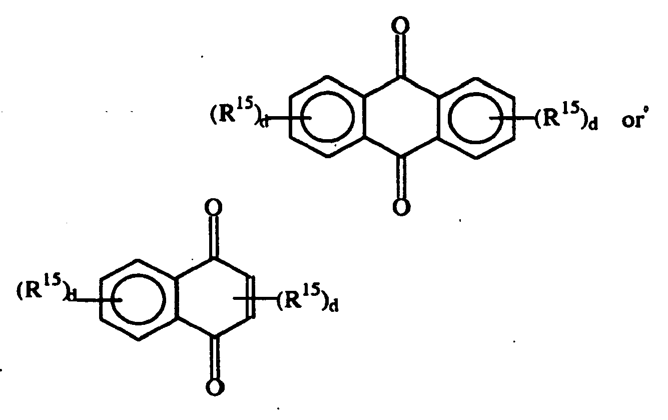 wherein R¹⁵ is separately in each occurrence is any substituent which does not prevent free radical formation or free radical reaction with other compounds; and d is separately in each occurrence an integer of from 0 to 4. Preferred quinone containing compounds are quinone compounds. Quinone compounds preferably correspond to the formula:

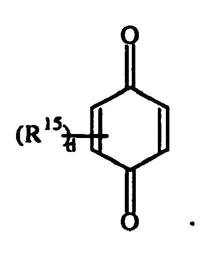

Preferably, R¹⁵ is separately in each occurrence R¹⁶, OR¹⁶ or SR¹⁶, wherein R¹⁶ is separately in each occurrence substituted or unsubstituted hydrocarbyl; more preferably substituted or unsubstituted alkyl, aryl, aralkyl, even more preferably substituted or unsubstituted C₁₋₈₀ alkyl C₆₋₆₀aryl, C₆₋₉₀aralkyl, and most preferably C₁₋₁₀ alkyl and C₆₋₁₄ aryl. Preferably, d is 0 to 2, even more preferably 0 to 1, and most preferably 0. Among preferred quinone structure containing compounds are benzoquinone and ortho, meta, or para substituted benzoquinone and ortho and para quinone. Preferably, R¹⁵ is R¹⁶ or OR¹⁶. More preferred quinones include anthraquinone, benzoquinone, 2-phenylbenzoquinone, orthoquinone and substituted benzoquinone. Most preferred quinones containing compounds include benzoquinone.

The amount of quinone used is that amount which accelerates cure of the compositions and does not inhibit adhesion of the composition to the substrate surface. If too little is used there is no significant increase in cure speed. If too much is used and the composition will not adhere to a substrate surface. Preferably, the quinone is used in an amount of 0.01 parts by weight based on 100 weight parts of the polymerizable composition or greater, more preferably 0.02 parts by weight or greater, and most preferably 0.04 parts by weight or greater. Preferably, the quinone is used in an amount of 1.0 parts by weight based on 100 weight parts of the polymerizable composition or less, more preferably 0.8 parts by weight or less, and most preferably 0.4 parts by weight or less.

In another embodiment the accelerator comprises at least one compound containing at least one aromatic ring and at least one, preferably two substituents on the aromatic ring selected from hydroxyl, ether and both wherein the two substituents are located either ortho or para with respect to one another, hereinafter substituted aromatic ring containing compound, and a compound having a peroxy moiety. The subsituted aromatic compound can contain any aromatic moiety, including those with multiple ring structures. The compounds preferably contain two or more functional groups selected from hydroxy and ether. Preferably, the substituted aromatic compounds contain at least one hydroxy and another hydroxy or ether moiety. Most preferably the substituted aromatic compound contains at least one hydroxy and at least one ether moiety. Preferably, the substituted compounds contain benzene, anthracene or naphthalene aromatic ring structures. The substituted aromatic compounds may be substituted with any substituent which does not interfere with the formation of free radicals or the reaction of the free radicals with other compounds. Preferred substituents include alkyl, aryl, or aralkyl groups, and hetero atoms containing groups selected from the group comprising oxygen and sulfur. Most preferred substituents include aryl groups and hetero atom containing groups.

Preferably, the substituted aromatic compounds correspond to one of the formulas: 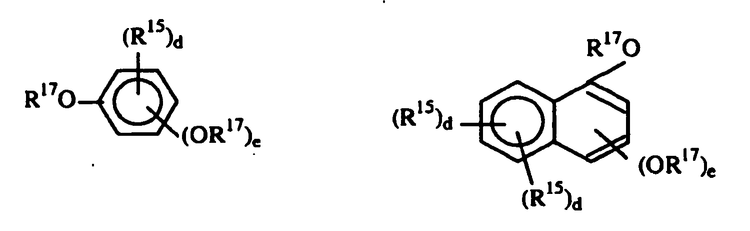 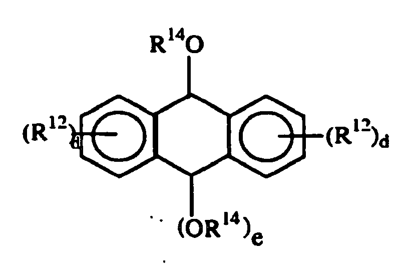 wherein:
R¹⁷ is separately in each occurrence hydrogen or any substituent which does not prevent free radical formation or free radical reaction with other compounds; and
R¹⁵ and d are as previously defined. Preferably, R¹⁷ is separately in each occurrence substituted or unsubstituted hydrocarbyl; more preferably substituted or unsubstituted alkyl, aryl, aralkyl or aralkyl; even more preferably substituted or unsubstituted C₁₋₁₀₀ alkyl C₆₋₉₀ aryl, or C₆₋₉₀aralkyl and most preferably C₁₋₂₀ alkyl. e is 0 or 1, preferably 1.

More preferably the substituted aromatic containing compounds correspond to the formulas: 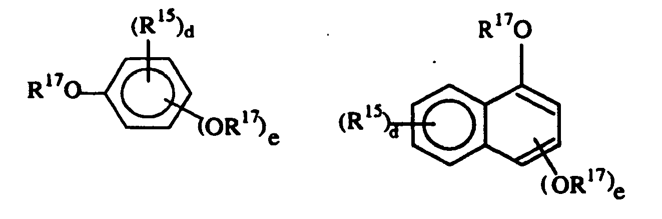 wherein R¹⁵, R¹⁷, d and e are described above.

Among most preferred substituted aromatic ring containing compounds are anthrahydroquinones, napthahydroquinones, methyl ether of hydroquinone and alkylethers of hydroquinone. The amount of substituted aromatic ring containing compound used is that amount which accelerates cure of the compositions, and which does not inhibit adhesion of the composition to the substrate surface is used. If too little is used there is no significant increase in cure speed. If too much is used and the composition will not adhere to a substrate surface. Preferably, the substituted aromatic ring containing compound is used in an amount of 0.1 part by weight based on 100 parts by weight of the polymerizable composition or greater, more preferably 1 part by weight or greater, and most preferably 2 parts by weight or greater. Preferably, the substituted aromatic ring-containing compound is used in an amount of 4 parts by weight of the polymerizable composition or less, more preferably 3 parts by weight or less, and most preferably 2.5 parts by weight or less.

In conjunction with the substituted aromatic ring-containing compound a peroxy-containing compound is used. Any peroxy-containing compound that reacts with the substituted aromatic ring-containing compound to form free radicals may be used. Peroxy containing compound as used herein refers to any compound having a peroxy (-O-O-) group which is capable of generating free radicals capable of initiating polymerization. Preferred peroxy-containing compounds include dialkyl peroxides, diaryl peroxides, diacyl peroxides, alkyl hydroperoxides, aryl hydroperoxides, and aryl hydroperoxides. More preferred peroxy-containing compounds include t-butyl peroxides, benzoyl peroxide, t-butyl perbenzoate.

The amount of peroxy-containing compound used is that amount which accelerates cure of the compositions. If too little is used there is no significant increase in cure speed. If too much is used the adhesive does not bond to polyolefins. Preferably, the peroxy-containing compound is used in an amount of 0.1 part by weight or greater based on 100 parts by weight of the polymerizable composition, more preferably 1 part by weight or greater, and most preferably 2 parts by weight or greater. Preferably, the peroxy-containing compound is used in an amount of 4 parts by weight or less based on 100 parts by weight of the polymerizable composition, more preferably 3 parts by weight or less, and most preferably 2.5 parts by weight or less.

Preferably, the relative amount of peroxy containing compound to substituted aromatic ring containing compound is selected such that the majority of the resultant free radicals generated by the peroxy compound reacts with the substituted aromatic ring compound. Thus, a molar ratio of peroxy containing compound to aromatic ring compound is one or less. If the ratio is too high then no adhesion to polyolefins would be observed. If the ratio is too low then the adhesive cure rate is not increased. Preferably, the molar ratio amount of peroxy containing compound to substituted aromatic ring containing compound is 1:4 or greater, and most preferably 2:3 or greater. Preferably, the molar ratio amount of peroxy containing compound to substituted aromatic ring containing compound is 1:1 or less.

Preferably, the accelerator is located in the part that does not contain the organoboron compound. Often the part containing the organoboron compound is referred to as the hardener side, and the other part is referred to as the resin side because the largest part of the polymerizable compound is found in this part.

The compositions of the invention further comprise one or more modifiers having olefinic unsaturated groups reactive with the compounds capable of free radical polymerization and further having a backbone which has a glass transition temperature of -50°C or less. Preferably, the modifier is soluble in the compounds capable of free radical polymerization. By soluble is meant that the modifier forms a homogeneous solution when mixed with the monomer of the polymerizable composition. The modifiers are preferably liquid at ambient temperatures. The modifiers are preferably low molecular weight compound or oligomers. Preferably, the modifiers have a weight average molecular weight (Mw) of 100 or more, and more preferably 1,000 or more. Preferably, the modifiers exhibit a weight average molecular weight of 5,000 or less and more preferably 3,000 or less. The backbone of the modifier can comprise any compounds which have a Tg of -50°C or less and preferably is soluble in the compounds capable of free radical polymerization. Preferably, the backbone of the modifier is derived from one or more unsaturated compounds, more preferably one or more olefins, one or more dienes or a mixture thereof. Most preferably the backbone is derived from one or more dienes. Preferred dienes are butadiene and isoprene. The reactive groups on the modifier comprise any group which reacts with the free radically polymerizable compounds. Included in such groups are vinyl, acrylate, methacrylate and styrene. The most preferred reactive groups are acrylates and methacrylates. An example of commercially available modifiers is HYCAR^{™} 2000 x 168 acrylate functional polybutadienes available from Emerald Performance Materials Inc. The modifiers are present in a sufficient amount to improve the low temperature adhesion of the compositions of the invention. Preferably, the compositions exhibit a lap shear according to ASTM D5868 of 2,500 psi (17 MPa), and more preferably 3,000 psi, (21 MPa) at -30°C to a e-coated metal substrate. Preferably, the modifier is present in an amount of 1 part by weight or greater based on 100 parts by weight of the polymerizable composition and more preferably 1.5 parts by weight or greater. Preferably, the modifier is present in an amount of 2.5 parts by weight or less of the polymerizable composition, and more preferably 2.0 parts by weight or less.

Hydrocarbyl as used herein means any moiety having both carbon and hydrogen atoms and includes saturated and unsaturated, branched and unbranched, hydrocarbon chains and/or ring structures. Alkyl refers to branched and unbranched saturated hydrocarbon chains. Alkenyl refers to branched and unbranched unsaturated hydrocarbon chains. Aryl means an aromatic hydrocarbon moiety. Alkaryl means an aromatic hydrocarbon moiety with a straight or branched hydrocarbon chain attached. Aralkyl means a straight or branched hydrocarbon chain with an aryl group attached. Acyl means a hydrocarbyl and carbonyl moiety. Unless otherwise stated these moieties may be substituted with any other substituent which does not significantly interfere in the function of the compound to which the moiety is attached or bonded.

The two-part polymerizable compositions or adhesive compositions of the invention are uniquely suited for use with conventional, commercially available dispensing equipment for two-part compositions. Once the two-parts have been combined, the composition should be used quickly, as the useful pot life (open time) may be short depending upon the monomer mix, the amount of organoboron compound, the amount of catalyst and the temperature at which the bonding is performed. The adhesive compositions of the invention are applied to one or both substrates and then the substrates are joined together, preferably with pressure to force excess composition out of the bond line. In general, the bonds should be made shortly after the composition has been applied, preferably within 10 minutes. The typical bond line thickness is 0.005 inches (0.13 mm) to 0.03 inches (0.76 mm). The bond line can be thicker if gap filling is needed as the composition of the invention can function as both an adhesive and a gap filler. The bonding process can easily be carried out at room temperature and to improve the degree of bonding, it is desirable to keep the temperature below 40°C, preferably about 30°C, and most preferably below 25°C.

The compositions may further comprise a variety of optional additives. One particularly useful additive is a thickener such as medium to high (10,000 to 1,000,000) molecular weight polymethyl methacrylate which may be incorporated in an amount of 10 to 60 weight parts, based on 100 parts by total weight of the composition. Thickeners may be employed to increase the viscosity of the composition to facilitate application of the composition.

Another particularly useful additive is an elastomeric material. The materials may improve the fracture toughness of compositions made therewith which can be beneficial when, for example, bonding stiff, high yield strength materials such as metal substrates that do not mechanically absorb energy as easily as other materials, such as flexible polymeric substrates. Such additives can be incorporated in an amount of 5 parts to 35 parts by weight, based on 100 parts by total weight of the composition. Useful elastomeric modifiers include the chlorinated or chlorosulphonated polyethylenes used as accelerators herein such as HYPALON™ 30 (commercially available from E. I. Dupont de Nemours & Co., Wilmington, Delaware) and block copolymers of styrene and conjugated dienes (commercially available from Dexco Polymers under the trademark VECTOR, and Firestone under the trademark STEREON). Also useful, and even more preferred, are certain graft copolymer resins such as particles that comprise rubber or rubber-like cores or networks that are surrounded by relatively hard shells, these materials often being referred to as "core-shell" polymers. Most preferred are the acrylonitrile-butadiene-styrene graft copolymers available from Rohm and Haas. In addition to improving the fracture toughness of the composition, core-shell polymers can also impart enhanced spreading and flow properties to the uncured composition. These enhanced properties may be manifested by a reduced tendency for the composition to leave an undesirable "string" upon dispensing from a syringe-type applicator, or sag or slump after having been applied to a vertical surface. Use of more than 20 parts by weight based on 100 parts by weight of the polymerizable compositions of a core-shell polymer additive is desirable for achieving improved sag-slump resistance. Generally the amount of toughening polymer used is that amount which gives the desired toughness to the polymer or the adhesive prepared.

Polymerizable compositions according to the invention may be used in wide variety of ways, including as adhesives, coatings, primers, to modify the surface of polymers, and injection molding resins. They may also be used as matrix resins in conjunction with glass and metal fiber mats such as in resin transfer molding operations. They may further be used as encapsulants and potting compounds such as in the manufacture of electrical components, printed circuit boards. Quite desirably, they provide polymerizable adhesive compositions that can bond a wide range of substrates, including polymers, wood, ceramics, concrete, glass and primed metals. Another desirable related application is their use in promoting adhesion of paints to low surface energy substrates such as polyethylene, polypropylene, polyethyleneterephthalate, polyamides, and polytetrafluoroethylene, and their co-polymers. In this embodiment the composition is coated onto the surface of the substrate to modify the surface to enhance the adhesion of the final coating to the surface of the substrate.

The compositions of the invention can be used in coating applications. In such applications the composition may further comprise a carrier such as a solvent. The coating may further contain additives well known to those skilled in the art for use in coatings, such as pigments to color the coating, inhibitors and UV stabilizers. The compositions may also be applied as powder coatings and may contain the additives well known to those skilled in the art for use in powder coatings.

The compositions of the invention can also be used to modify the surface of a polymeric molded part, extruded film or contoured object. Compositions of the invention can also be used to change the functionality of a polymer particle by surface grafting of polymer chains on to the unmodified plastic substrate.

Polymerizable compositions of the invention are especially useful for adhesively bonding low surface energy plastic or polymeric substrates that historically have been very difficult to bond without using complicated surface preparation techniques, priming, etc. By low surface energy substrates is meant materials that have a surface energy of 45 mJ/m² or less, more preferably 40 mJ/m² or less and most preferably 35 mJ/m² or less. Included among such materials are polyethylene, polypropylene, acrylonitrile-butadiene-styrene, polyamides, syndiotactic polystyrene, olefin containing block co-polymers, and fluorinated polymers such as polytetrafluoroethlene (TEFLONT^{™}) which has a surface energy of less than 20 mJ/m². (The expression "surface energy" is often used synonymously with "critical wetting tension" by others.) Other polymers of somewhat higher surface energy that may be usefully bonded with the compositions of the invention include polycarbonate, polymethylmethacrylate, and polyvinylchloride.

The polymerizable compositions of the invention can be easily used as two-part adhesives. The components of the polymerizable compositions are blended as would normally be done when working with such materials. The liberating compound for the organoboron compound is usually included with the olefinic, polymerizable component so as to separate it from the organoboron compound, thus providing one-part of the two-part composition. The organoboron compounds of the polymerization initiator system provides the second part of the composition and is added to the first part shortly before it is desired to use the composition. Similarly, the Lewis acid catalyst where used for the heterocyclic ring opening compound polymerization is kept separate from the heterocyclic ring opening compound. The Lewis acid catalyst may be added to the first part directly or it may be pre-dissolved in an appropriate carrier such as a reactive olefinic monomer, i.e., methyl methacrylate or a MMA/PMMA viscous solution.

For a two-part adhesive such as those of the invention to be most easily used in commercial and industrial environments, the volume ratio at which the two-parts are combined should be a convenient whole number. This facilitates application of the adhesive with conventional, commercially available dispensers. Such dispensers are shown in U.S. Patent Numbers 4,538,920 and 5,082,147 and are available from Conprotec, Inc. (Salem, New Jersey) under the trade name MIXPAC. Typically, these dispensers use a pair of tubular receptacles arranged side-by-side with each tube being intended to receive one of the two-parts of the adhesive. Two plungers, one for each tube, are simultaneously advanced (e.g., manually or by a hand-actuated ratcheting mechanism) to evacuate the contents of the tubes into a common, hollow, elongated mixing chamber that may also contain a static mixer to facilitate blending of the two-parts. The blended adhesive is extruded from the mixing chamber onto a substrate. Once the tubes have been emptied, they can be replaced with fresh tubes and the application process continued. The ratio at which the two-parts of the adhesive are combined is controlled by the diameter of the tubes. (Each plunger is sized to be received within a tube of fixed diameter, and the plungers are advanced into the tubes at the same speed.) A single dispenser is often intended for use with a variety of different two-part adhesives and the plungers are sized to deliver the two-parts of the adhesive at a convenient mix ratio. Some common mix ratios are 1:1, 2:1, 4:1 and 10: 1, but preferably less than 10:1 and more preferably less than 4:1.

Preferably, the mixed two-part compositions of the invention have a suitable viscosity to allow application without dripping. Preferably, the viscosities of the two individual components should be of the same order or magnitude. Preferably, the mixed compositions have the viscosity of 100 (0.1 Pa.S) centipoise or greater, more preferably 1,000 (1.0 Pa.S) centipoise or greater and most preferably 5,000 (5.0 Pa.S) centipoise or greater. Preferably, the adhesive compositions have a viscosity of 150,000 (150 Pa.S) centipoise or less, more preferably 100,000 (100 Pa.S) centipoise or less and most preferably 50,000 (50 Pa.S) centipoise or less.

### Specific Embodiments

The following examples are included for illustrative purposes only and are not intended to limit the scope of the claims. Unless otherwise stated all parts and percentages are by weight.

### Ingredients

The following ingredients were used in the examples provided hereinafter:
Methyl methacrylate - with 50ppm MEHQ™ methoxyphenol supplied by Rohm and Haas Company;
HYPALON^{™} 20 - chlorosulfonated chlorinated polyethylene, trademark of DuPont;
PARALOID™ BTA-753(ER) - methacrylate-butadiene-styrene copolymer, trademark of Rohm and Haas Company;
4-Methoxyphenol supplied by Aldrich Chemical Company, Inc.
HYCAR™2000X168 - 1,3-butadiene, homopolymer, carboxy-terminated, ester with glycidyl methacrylate trademark of Emerald Performance Materials, LLC.
Acrylic Acid supplied by Aldrich Chemical Company, Inc.
4-Methoxyphenol supplied by Aldrich Chemical Company, Inc. (also known as methyl ether of hydroquinone).
1,4-Benzoquinone supplied by Aldrich Chemical Company, Inc.
CAB-O-SIL™ - fumed silica trademark of Cabot Corporation.

Two part formulations were prepared by mixing the ingredients for each part and then placed in separate containers. Several different part A (resin side) formulations were made.

### Adhesive Preparation

All resin formulations were mixed using a dual asymmetric centrifugal FlackTek SpeedMixer™ DAC 400 FVZ by Hauschild Engineering. The chlorosulfonated chlorinated polyethylene was combined with methyl methacrylate (MMA) into a preblend in a 40 percent chlorosulfonated chlorinated polyethylene to 60 percent MMA ratio using a roller mill. The chlorosulfonated chlorinated polyethylene/MMA preblend was added to a speed mixing cup followed by methyl methacrylate, methoxyphenol (MEHQ^{™}), 1,4-benzoquinone and acrylate functional polybutadiene. Methacrylate-butadiene-styrene copolymer was then added to the speed mixing cup and immediately incorporated with the other ingredients by hand using a tongue depressor. The speed mixing cup was placed into the speed mixer and mixed three times consecutively for one minute at a speed of 1800 rpm. The temperature of the sample was checked after each mix using an infrared temperature probe and visually evaluated for homogeneity. If the sample was not visually homogeneous, additional one minute 1,800 rpm mixing cycles were utilized until visual homogeneity was achieved. The temperature of each sample was kept below 130°F (54°C) by letting the sample sit at room temperature between additional mixes. After each sample was cooled to room temperature acid and CAB-O-SIL™ TS-720 fumed silica was charged into the speed mixing cup and immediately incorporated by hand using a tongue depressor. The speed mixing cup was then placed into the speed mixer and mixed twice for 1 minute at 1,800 rpm.

### Lap Shear Preparation

The substrates used in the lap shear construction were ED6100H E-Coated cold rolled steel supplied by ACT Laboratories, Inc. and DLGF 9310.00ZB glass filled polypropylene supplied by The Dow Chemical Company. Each substrate was cut into 1 inch x 4 inch (2.54 cm x 10.2 cm) strips. The ½ inch (1.27 cm) bonding section of each strip was measured and marked. All resin formulations were combined with the hardener using a bag mixing technique. This bag mixing process was accomplished by adding the hardener then resin to a polyethylene bag in a one to one ratio by weight. The bag was sealed and mixed by hand using a rolling motion on the palm of the hand to ensure an even mix was present. The corner of the bag was cut with scissors and the mixed adhesive was applied evenly to one side of the pre-marked ½ inch (1.27 cm) portion of the 1 inch x 4 inch (2.54 cm x 10.2 cm) substrate strips. To ensure consistent bond thickness 30 mil (0.76 mm) glass beads were applied to the adhesive and another 1 inch x 4 inch (2.54 cm x 10.2 cm) substrate strip was laid on top to assemble the lap shear joint. The lap shears were held together with clips while curing for various times at room temperature. One set of samples used e-coat substrate and were cured at room temperature for a time period of about 24 hours. A second set of samples was cured at 80°C for a period of 16 hours.

### Lap Shear Testing

The loads to failure of the lap shears were measured using an Instron™ 5500R Materials Testing System (Instron™ Corporation). Samples tested at - 30°C were placed in a -30°C freezer for one hour and then immediately pulled at room temperature. Samples tested at 107°C were placed at 107°C for half an hour in a hot box attached to the Instron and then pulled at 107°C. A third set of samples was tested at room temperature. Pneumatic grips were used to hold the lap shear samples in place. The distance between the grips was seven inches (17.8 cm). The crosshead speed was 0.5 in./min. (1.27 cm/min.). The computer measured the load as a function of crosshead displacement and loads were converted to pounds of force per square inch of bond area. After each lap shear was tested to failure, a failure mode was assigned by visual evaluation. Failure modes were classified as Adhesive Failure AF, Cohesive Failure CF, Thin Film Cohesive Failure TFCF, Substrate Failure SUB, Surface Delamination,SD, E-coat Failure E or voids V. If a mixed failure mode was present each failure mode was reported and a percentage estimate was assigned.

Part B comprised 65 percent methyl methacrylate, 25 percent of methacrylate-butadiene-styrene copolymer, 0.25 percent of IRGASTAD™ FS301 FF which is IRGASTAB™ FS301 FF- a mixture of oxidized bis (hydrogenated tallow alkyl) amines (IRGASTAB™ FS042)and tris (2,4-di-tert-butyl phenol) phosphate trademark of Ciba Specialty Chemicals and 10 parts of a complex of tri-n-butyl borane and methoxypropyl amine. The formulations were tested for Lap Shear Strength as described above and the results are compiled in Table 2. In Example 2, 2 percent of the amine borane complex contained an organo alumina. In Example 3 the methyl methacrylate was present in 60 weight percent, 5 percent of the acrylate functional polybutadiene was present and all of the amine borane complex contained alumina. Several Part A formulations were prepared using the procedures described above. The formulations are described below in Table 1.

The following examples illustrate the improvement of lap shear strength and failure mode by the addition of a low Tg modifier.

**Table 1**

| Example/Ingredients for Part A | 1 % | 2 % |
|---|---|---|
| Methyl Methacrylate | 57.2 | 52.36 |
| Chlorosulfonated chlorinated polyethylene | 14.79 | 24.94 |
| Acrylate functional polybutadiene | 0 | 3.14 |
| methacrylate-butadiene-styrene copolymer | 15.81 | 3.14 |
| Acrylic acid | 11.67 | 11.14 |
| Methyl ether of hydroquinone | 0.24 | 0.24 |
| Fumed silica | 0 | 4.76 |
| 1,4-benzoquinone | 0.29 | 0.29 |
| Total | 100 | 100 |

**Table 2**

| Example/Ingredients for Part A | 1 | 2 |
|---|---|---|
| Room Temperature, Cure Lap Shear at -30°C, psi/(MPa) failure mode | 1897 (13.08) 10CF 90AF | 3201 (22.07) 5CF 87TFCF 8E |
| Room Temperature Cure, Lap Shear at Room Temperature psi/(MPa) failure mode | 2553 (17.60) CF | 2149 (14.82) CF |
| Room Temperature Cure, Lap Shear 107°C psi/(MPa) failure mode | 483 (3.33) 90CF-10E | 440 (3.03). 95CF 5E |
| 80°C Cure, Lap Shear at room temperature psi/(MPa) failure mode | -- | 2871 (19.79) 58CF 13TFCF 29E |
| 80°C Cure, Lap Shear at -30°C psi/(MPa) failure mode | -- | 2807 (19.35) 15CF 27TFCF 58E |
| 80°C Cure, Lap Shear at 107°C psi/(MPa) failure mode | -- | 434 (2.99) 95CF 5E |

## Claims

1. A two part polymerizable; composition comprising in one part i) an organoboron compound capable of forming free radical generating species and in the second part ii) one or more compounds capable of free radical polymerization, iii) cure accelerator comprising a) at least one compound containing a quinone structure or b) at least one compound containing at least one aromatic ring and one or more substituents on the aromatic ring selected from hydroxyl, ether or both and a peroxide containing compound that reacts with the substituted aromatic ring containing compound to form free radicals, iv) from 1 to 2.5 parts by weight based on 100 parts by weight of the composition of one or more modifiers having unsatured definic groups reactive with the compounds capable of free radical polymerization soluble in said compounds and having a glass transition temperature of less than -50°C and v) 5 to 35 parts by weight based on 100 parts by weight of the composition of one or more chlorinated or chlorosulfonated polyethylenes or block copolymers of styrene and conjugated dienes.

2. A two part composition according to Claim 1 wherein the second part further contains a liberating agent capable of causing the organoboron compound to form a free radical generating species upon contracting the two parts.

3. A two part composition according to Claim 1 or 2 wherein the first part further comprises one or more compounds capable of free radical polymerization.

4. A two part composition according to any one of Claims 1 to 3 wherein the aromatic compound has two or more substituents of hydroxyl, ether or both wherein the substituents are located ortho or para in one another.

5. A two part composition according to any one of Claims 1 to 4 wherein the organoboron compound is an organoborate, an organoboron amine complex or an amido-borate.

6. A two part composition according to any one of Claims 1 to 5 wherein the modifier has a backbone derived from one or more olefins, dienes or a mixture thereof.

7. A two part composition according to Claims 1 to 6 wherein the modifier has a backbone derived from one or more dienes.

8. A two part composition according to any one of Claims 1 to 7 wherein the functional group on the modifier comprise acrylate or methacrylate groups.

9. A two part composition according to any one of Claims 1 to 8 wherein the one or more compounds capable of free radical polymerisation comprise acrylate or methacrylate monomers, oligomers, polymers or a mixture thereof.

10. A method of polymerization comprising contacting the components of the polymerizable composition of any one of Claims 1 to 9 under conditions such that the one or more compounds capable of free radical polymerization undergo polymerization.

11. The method of Claim 10 which further comprises the step of heating the composition to an elevated temperature under conditions such that the organoboron amine complex disassociates.

12. A method of polymerization according to Claim 10 wherein the contacting occurs at ambient temperature.

13. A method of bonding two or more substrates together which comprises:
contacting the components of the composition of any one of claims 1 to 9 together under conditions such that polymerization is initiated;
contacting the adhesive composition with the two or more substrates;
positioning the two or more substrates such that the adhesive composition is located between the two or more substrates wherein they are in contact with one another; and
allowing the adhesive to cure so as to bind the two or more substrates together.

14. A method of bonding two or more substrates according to Claim 13 which further comprises heating the adhesive composition to a temperature such that the organoboron amine complex disassociates and forms a free radical generating species.

15. A method of bonding according to Claim 13 wherein the contacting occurs at ambient temperature.

## Patentansprüche

1. Zweiteilige polymerisierbare Zusammensetzung, die in einem Teil i) eine Organoborverbindung umfasst, die freie Radikale erzeugende Spezien bilden kann, und im zweiten Teil ii) eine oder mehrere Verbindungen, die zur radikalischen Polymerisation in der Lage sind, iii) einen Härtungsbeschleuniger, der Folgendes umfasst: a) mindestens eine Verbindung, die eine Chinonstruktur enthält, oder b) mindestens eine Verbindung, die mindestens einen aromatischen Ring sowie einen oder mehrere Substituenten an dem aromatischen Ring enthält, die aus Hydroxyl, Ether oder beiden ausgewählt sind, sowie eine peroxidhaltige Verbindung, die mit der einen substituierten aromatischen Ring enthaltenden Verbindung reagiert, um freie Radikale zu bilden, iv) von 1 bis 2,5 Gewichtsteile, bezogen auf 100 Gewichtsteile der Zusammensetzung, von einem oder mehreren Modifikatoren mit ungesättigten olefinischen Gruppen, die mit den Verbindungen reagieren können, die zur radikalischen Polymerisation in der Lage sind, und in diesen Verbindungen löslich sind und eine Glasübergangstemperatur kleiner als - 50°C haben, und v) 5 bis 35 Gewichtsteile, bezogen auf 100 Gewichtsteile der Zusammensetzung, von einem oder mehreren chlorierten oder chlorsulfonierten Polyethylenen oder Blockcopolymeren von Styrol und konjugierten Dienen.

2. Zweiteilige Zusammensetzung nach Anspruch 1, wobei der zweite Teil ferner ein Freisetzungsmittel enthält, das in der Lage ist, die Organoborverbindung dazu zu veranlassen, beim Kontakt mit den zwei Teilen eine freie Radikale erzeugende Spezies zu bilden.

3. Zweiteilige Zusammensetzung nach Anspruch 1 oder 2, wobei der erste Teil ferner eine oder mehrere Verbindungen umfasst, die zur radikalischen Polymerisation in der Lage sind.

4. Zweiteilige Zusammensetzung nach einem der Ansprüche 1 bis 3, wobei die aromatische Verbindung zwei oder mehr Substituenten von Hydroxyl, Ether oder beiden hat, wobei sich die Substituenten in ortho- oder para-Stellung zueinander befinden.

5. Zweiteilige Zusammensetzung nach einem der Ansprüche 1 bis 4, wobei die Organoborverbindung ein Organoborat, ein Organobor-Amin-Komplex oder ein Amidoborat ist.

6. Zweiteilige Zusammensetzung nach einem der Ansprüche 1 bis 5, wobei der Modifikator eine von einem oder mehreren Olefinen, Dienen oder einer Mischung davon hergeleitete Hauptkette hat.

7. Zweiteilige Zusammensetzung nach einem der Ansprüche 1 bis 6, wobei der Modifikator eine von einem oder mehreren Dienen hergeleitete Hauptkette hat.

8. Zweiteilige Zusammensetzung nach einem der Ansprüche 1 bis 7, wobei die funktionelle Gruppe an dem Modifikator Acrylat- oder Methacrylatgruppen umfasst.

9. Zweiteilige Zusammensetzung nach einem der Ansprüche 1 bis 8, wobei die eine oder mehreren Verbindungen, die zur radikalischen Polymerisation in der Lage sind, Acrylat- oder Methacrylatmonomere, -oligomere, -polymere oder eine Mischung davon umfassen.

10. Polymerisationsverfahren, bei dem die Komponenten der polymerisierbaren Zusammensetzung nach einem der Ansprüche 1 bis 9 unter solchen Bedingungen in Kontakt gebracht werden, dass die eine oder mehreren Verbindungen, die zur radikalischen Polymerisation in der Lage sind, eine Polymerisation erfahren.

11. Verfahren nach Anspruch 10, das ferner den Schritt des Erhitzens der Zusammensetzung auf eine erhöhte Temperatur unter solchen Bedingungen umfasst, dass der Organobor-Amin-Komplex dissoziiert.

12. Polymerisationsverfahren nach Anspruch 10, wobei das Inkontaktbringen bei Umgebungstemperatur stattfindet.

13. Verfahren zum Zusammenkleben von zwei oder mehr Substraten, mit den folgenden Schritten:
Inkontaktbringen der Komponenten der Zusammensetzung nach einem der Ansprüche 1 bis 9 unter solchen Bedingungen, dass eine Polymerisation in Gang gebracht wird;
Inkontaktbringen der Klebstoffzusammensetzung mit den zwei oder mehr Substraten;
Positionieren der zwei oder mehr Substrate in einer Weise, dass sich die Klebstoffzusammensetzung zwischen den zwei oder mehr Substraten befindet, wobei diese miteinander in Kontakt stehen; und
den Klebstoff aushärten lassen, um die zwei oder mehr Substrate miteinander zu verbinden.

14. Verfahren zum Zusammenkleben von zwei oder mehr Substraten nach Anspruch 13, bei dem ferner die Klebstoffzusammensetzung auf eine solche Temperatur erhitzt wird, dass der Organobor-Amin-Komplex dissoziiert und eine freie Radikale erzeugende Spezies bildet.

15. Verfahren zum Zusammenkleben nach Anspruch 13, wobei das Inkontaktbringen bei Umgebungstemperatur stattfindet.

## Revendications

1. Composition polymérisable en deux parties, qui comprend, dans une partie,
i) un composé organo-boré, capable de former une espèce générant des radicaux libres,
et dans la deuxième partie,
ii) un ou plusieurs composé(s) capable(s) de polymériser par voie radicalaire,
iii) un accélérateur de durcissement, comprenant :
a) au moins un composé comportant une structure de type quinone,
b) ou au moins un composé comportant au moins un cycle aromatique et un ou plusieurs substituant(s) porté(s) par ce cycle aromatique, choisi(s) parmi le groupe hydroxyle, les groupes de type éther, ou l'un et les autres, et au moins un composé à fonction peroxyde qui réagit avec le composé à cycle aromatique porteur de substituant(s) de manière à former des radicaux libres,
iv) de 1 à 2,5 parties en poids, pour 100 parties en poids de la composition, d'un ou de plusieurs modificateur(s) qui comporte(nt) des groupes insaturés oléfiniques réactifs vis-à-vis des composés capables de polymériser par voie radicalaire, qui est ou sont soluble(s) dans ces composés, et qui présente(nt) une température de transition vitreuse inférieure à -50 °C,
v) et de 5 à 35 parties en poids, pour 100 parties en poids de la composition, d'un ou de plusieurs polyéthylène(s) chloré(s) ou chlorosulfoné(s) ou copolymère(s) à blocs de styrène et de diène conjugué.

2. Composition en deux parties, conforme à la revendication 1, dans laquelle la deuxième partie contient en outre un agent libérateur capable, une fois les deux parties mises en contact, de provoquer la formation, à partir du composé organo-boré, d'une espèce générant des radicaux libres.

3. Composition en deux parties, conforme à la revendication 1 ou 2, dans laquelle la première partie contient en outre un ou plusieurs composé(s) capable(s) de polymériser par voie radicalaire.

4. Composition en deux parties, conforme à l'une des revendications 1 à 3, dans laquelle le composé aromatique comporte deux substituants ou plus, choisis parmi le groupe hydroxyle, les groupes de type éther, ou l'un et les autres, lesquels substituants sont placés en positions ortho ou para l'un par rapport à l'autre.

5. Composition en deux parties, conforme à l'une des revendications 1 à 4, dans laquelle le composé organo-boré est un organo-borate, un complexe d'amine et d'organo-boré, ou un amido-borate.

6. Composition en deux parties, conforme à l'une des revendications 1 à 5, dans laquelle le modificateur possède un squelette dérivé d'un ou de plusieurs oléfine(s) ou diène(s), ou d'un mélange de tels composés.

7. Composition en deux parties, conforme à l'une des revendications 1 à 6, dans laquelle le modificateur possède un squelette dérivé d'un ou de plusieurs diène(s).

8. Composition en deux parties, conforme à l'une des revendications 1 à 7, dans laquelle les groupes fonctionnels portés par le modificateur comprennent des groupes acrylate ou méthacrylate.

9. Composition en deux parties, conforme à l'une des revendications 1 à 8, dans laquelle le ou les composé(s) capable(s) de polymériser par voie radicalaire comprend ou comprennent des monomères de type acrylate ou méthacrylate, des oligomères ou des polymères de tels monomères, ou un mélange de tels composés.

10. Procédé de polymérisation, comportant le fait de mettre en contact les composants d'une composition polymérisable conforme à l'une des revendications 1 à 9, dans des conditions telles qu'il y a polymérisation du ou des composé(s) capable(s) de polymériser par voie radicalaire.

11. Procédé conforme à la revendication 10, qui comporte en outre une étape consistant à chauffer la composition jusqu'à une température élevée, dans des conditions telles que le complexe d'amine et d'organo-boré se dissocie.

12. Procédé de polymérisation conforme à la revendication 10, dans lequel la mise en contact a lieu à température ambiante.

13. Procédé permettant de coller ensemble deux substrats ou plus, lequel procédé comporte les étapes suivantes :
- mettre en contact les composants d'une composition conforme à l'une des revendications 1 à 9, dans des conditions telles que la polymérisation est amorcée ;
- mettre la composition adhésive en contact avec les deux substrats ou plus ;
- disposer les deux substrats ou plus de telle façon que la composition adhésive soit placée entre les deux substrats ou plus, grâce à quoi ils se trouvent en contact l'un avec l'autre ou les uns avec les autres ;
- et laisser l'adhésif durcir de manière à ce que les deux substrats ou plus soient collés ensemble.

14. Procédé permettant de coller ensemble deux substrats ou plus, conforme à la revendication 13, qui comporte en outre le fait de chauffer la composition adhésive jusqu'à une température telle que le complexe d'amine et d'organo-boré se dissocie et forme une espèce générant des radicaux libres.

15. Procédé de collage conforme à la revendication 13, dans lequel la mise en contact a lieu à température ambiante.
